# EUROPÄISCHE PATENTSCHRIFT

(11) **EP 0 594 980 B1**
(45) Veröffentlichungstag und Bekanntmachung des Hinweises auf die Patenterteilung: **07.02.1996**
(21) Anmeldenummer: 93113968.7
(22) Anmeldetag: 01.09.1993
(51) Int. Cl.: B60R 25/02

(54) **Lenkung für ein Kraftfahrzeug**
Steering for an automobile
Direction pour véhicule automobile

(30) Priorität: 30.10.1992 DE 4236701
(43) Veröffentlichungstag der Anmeldung: 04.05.1994
(73) Patentinhaber: Valeo Deutschland GmbH & Co. Sicherheitssysteme, D-85253 Erdweg (DE)
(72) Erfinder: Weber, Günter, D-42113 Wuppertal (DE)
(74) Vertreter: COHAUSZ HASE DAWIDOWICZ & PARTNER

(56) Entgegenhaltungen:
- EP-A- 0 058 590
- EP-A- 0 336 881
- US-A- 3 566 634

## Beschreibung

Die Erfindung betrifft eine Lenkung für ein Kraftfahrzeug mit einer Lenkspindel, an der das Lenkrad lösbar angekuppelt ist, wobei das Ein- und Auskuppeln der Kupplung durch ein Lenkungsschloß erfolgt und bei Schlüsselabzug die Lenkspindel gegen Verdrehen gesperrt ist. Eine solche Lenkung ist aus der EP-A-0 058 590 bekannt.

Es ist bekannt, die Lenkspindel einer Kraftfahrzeuglenkung durch den Bolzen eines Lenkschlosses zu blockieren. Alternativ wurde vorgeschlagen, das Lenkrad von der Lenkspindel abzukuppeln, wie dies die EP-A-0 058 590 zeigt.

Ein bei abgezogenem Schlüssel sich frei drehendes Lenkrad macht einen Fahrer unsicher und hat darüber hinaus den Nachteil, daß nach Einstecken des Schlüssels in das Lenkradschloß und nach Einkuppeln des Lenkrades das Lenkrad nicht mehr in derselben Drehstellung zur Lenkspindel steht wie zuvor. Die Stellung des Lenkrades stimmt dann nicht mehr mit der Stellung der Kraftfahrzeugvorderräder überein, wodurch der Fahrer zusätzlich in der Benutzung unsicherer wird.

Aufgabe der Erfindung ist es, eine Lenkung der eingangs genannten Art so zu verbessern, daß unter Beibehaltung des Zustandes, daß über das Lenkrad keine Kräfte auf die gesperrte Lenkspindel übertragbar sind, dennoch das Lenkrad bei abgezogenem Schlüssel nicht frei drehbar ist, sondern im normalen Gebrauch stets dieselbe Drehstellung gegenüber der Lenkspindel aufweist.

Diese Aufgabe wird erfindungsgemäß dadurch gelöst, daß zumindest in der entkuppelten Stellung der Kupplung das Lenkrad mit der Lenkspindel über eine Kupplung verbunden ist, die einen solch begrenzten Drehhalt erzeugt, daß bei gesperrter Lenkspindel und gelöster Kupplung das Lenkrad gegenüber der Lenkspindel verdrehbar ist, wenn ein vorbestimmtes Drehmoment überwunden ist.

Bei abgezogenem Schlüssel und gesperrter Lenkspindel ist das Lenkrad innerhalb eines bestimmten Drehmomentbereichs kraft- und/oder formschlüssig mit der Lenkspindel verbunden und nur wenn ein Unbefugter eine verhältnismäßig große Kraft auf das Lenkrad ausübt, um die Sperre der Lenkspindel überwinden zu wollen, wird der Halt des Lenkrades an der Lenkspindel gelöst. Damit wird für den befugten Benutzer des Kraftfahrzeuges die Benutzung der Lenkung in gleicher Weise möglich wie bei Fahrzeugen ohne Kupplung zwischen Lenkrad und Lenkspindel und nur ein Kraftfahrzeugdieb wird bei hoher Kraftaufwendung auf das Lenkrad die begrenzt haltende Kupplung zwischen Lenkrad und Lenkspindel lösen.

Die erfindungsgemäße Kupplung hat damit zwei unterschiedliche Wirkungen. Bei eingestecktem Schlüssel und entsperrter Lenkspindel ist das Lenkrad formschlüssig und unlösbar mit der Lenkspindel verbunden und bei abgezogenem Schlüssel ist das Lenkrad immer noch formschlüssig mit der Lenkspindel verbunden, aber dieser Formschluß und/oder alternativ Kraftschluß ist überwindbar.

Eine besonders einfache Konstruktion wird dann geschaffen, wenn die in einem begrenzten Drehwiderstand erzeugende Kupplungsfunktion von der Kupplungsvorrichtung ausübbar ist, wobei bei gesperrter Lenkspindel die Kupplung nur noch einen begrenzten Drehhalt und bei entsperrter Lenkspindel einen unüberwindbaren Drehhalt zwischen Lenkspindel und Lenkrad erzeugt. Hierbei kann die eine Kupplungshälfte bildende Kupplungshülse gegen Federdruck verschiebbar sein und damit bei abgezogenem Schlüssel dafür sorgen, daß ein unzulässig hoher Kraftaufwand auf das Lenkrad dazu führt, daß die Hülse gegen Federdruck zurückgeschoben wird, um das Lenkrad vollständig zu entsperren, so daß durch das Lenkrad keine oder nur eine unerhebliche Kraft auf die Lenkspindel ausübbar ist.

Alternativ wird vorgeschlagen, daß die in einem begrenzten Drehwiderstand erzeugende Kupplungsfunktion von einer zweiten Kupplung erzeugt wird. Eine solche zweite Kupplung kann entweder seitlich angeordnet werden oder in axialer Richtung verschoben bzw. innerhalb der ersten Kupplung angeordnet sein. Hierzu wird vorgeschlagen, daß die zweite Kupplung ein seitlich der Lenkspindel liegendes Teil aufweist, das an der Lenkspindel fest ist und am Lenkrad bzw. an einer Welle des Lenkrades begrenzt lösbar ist.

Alternativ wird vorgeschlagen, daß die zweite Kupplung ein seitlich der Lenkradspindel liegendes Teil aufweist, das am Lenkrad bzw. an einer Welle des Lenkrades fest ist und an der Lenkspindel begrenzt lösbar gehalten ist.

Besonders vorteilhaft ist es, wenn die zweite, einen begrenzten Halt erzeugende Kupplung ein Formteil insbesondere eine Kugel in der einen Kupplungshälfte aufweist, das in eine entsprechend geformte Ausnehmung der anderen Kupplungshälfte einrastend gehalten ist. Hierbei kann die in einem der zwei Kupplungshälften gelagerte Kugel radial oder axial zur Lenkspindelachse gegen Federdruck beweglich sein.

Der begrenzte Halt des Lenkrades an der Lenkspindel bei abgezogenem Schlüssel kann auch durch eine Reibkupplung erzeugt werden. Eine Reibkupplung hat denselben Vorteil, daß bis auf eine unzulässig hohe Kraftaufwendung auf das Lenkrad bei abgezogenem Schlüssel Lenkrad und Lenkspindel stets miteinander verbunden sind und damit der Fahrer nicht bemerkt, daß überhaupt eine solche Kupplung vorhanden ist, die verhindert, daß ein Dieb über das Lenkrad die Sperre der Lenkspindel überwindet. Wird aber bei einem solch hohen Kraftaufwand das Lenkrad durch einen Unbefugten gegenüber der Lenkspindel verdreht, so würde bei einer reinen Reibkupplung die verdrehte Stellung beibehalten bleiben, so daß der Fahrer nicht mehr an der Stellung des Lenkrades erkennen kann, wie die Stellung der Vorderräder des Kraftfahrzeuges ist. Deshalb wird vorgeschlagen, daß zusätzlich zu einer Reibkupplung eine Rastvorrichtung angeordnet ist, die bei einem Zurückdrehen oder Weiterdrehen des Lenkrades gegenüber der Lenkspindel dafür sorgt, daß das Lenkrad wieder in die richtige Grundstellung gegenüber der Lenkspindel gelangt.

Besonders vorteilhaft ist es, wenn die Kupplungszähne bzw. -klauen so ausgebildet sind, insbesondere asymmetrisch oder ungleiche Teilung, daß die Kupplung nur in der vorgegebenen Normalstellung des Lenkrades schließbar ist. Nach einem vergeblichen Diebstahlversuch, d.h. nach Überwindung der einen begrenzten Drehwiderstand erzeugenden Kupplungsfunktion ist der berechtigte Fahrzeugführer gezwungen, das Lenkrad zunächst in die vorgesehene Normalstellung zurückzudrehen, bevor er das Fahrzeug starten kann. In der Normalstellung rastet die zweite Kupplungsfunktion hör- und fühlbar ein.

Vorteilhafte Weiterbildungen der Erfindung ergeben sich auch aus den Unteransprüchen.

Ausführungsbeispiele der Erfindung sind in den Zeichnungen dargestellt und werden im folgenden näher beschrieben. Es zeigen:
- Fig. 1: ein erstes Ausführungsbeispiel mit seitlich angeordneter zweiter Kupplung;
- Fig. 2: ein zweites Ausführungsbeispiel mit in der Welle des Lenkrades radial bzw. diagonal angeordneter zweiter Kupplung und
- Fig. 3 + 4: Ausführungsbeispiele, bei denen die einen begrenzten Drehwiderstand erzeugende Kupplungsfunktion durch die erste Kupplung selbst erzeugt wird (entsprechende Ausführung der Kupplungszähne).

Die Kraftfahrzeuglenkung weist eine Lenkspindel 1 auf, an derem oberen Ende die Welle 2 eines Lenkrades 3 lösbar befestigt ist. An dem der Welle 2 nahen Ende der Lenkspindel 1 ist auf der Lenkspindel 1 eine Hülse 4 koaxial gelagert, die axial auf der Lenkspindel 1 durch ein Lenkschloß 5 beweglich ist. Zwischen der Hülse 4 und der Lenkspindel 1 liegt eine Paßfeder 6, die dafür sorgt, daß trotz der Längsverschieblichkeit der Hülse 4 diese drehfest an der Lenkspindel 1 gehalten ist.

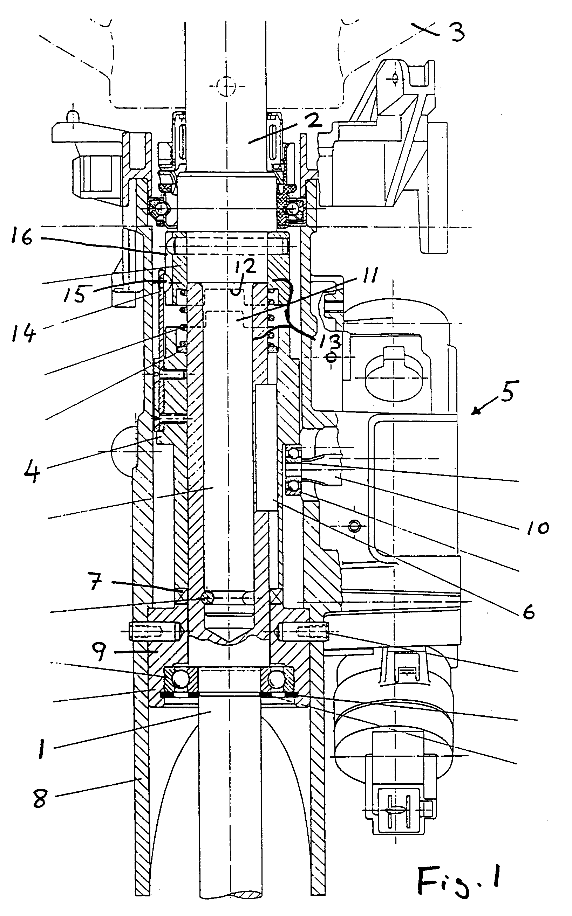

Bei Schlüsselabzug nimmt die Hülse 4 die in Fig. 1 dargestellte untere Stellung ein, bei der das untere Ende der Hülse 4 mit Vorsprüngen, insbesondere Klauen oder Zähnen 7 in entsprechenden Ausnehmungen des Lenkungsgehäuses 8 bzw. eines mit dem Gehäuse verbundenen Teils 9 drehfest einliegt, so daß in dieser Stellung die Lenkspindel 1 gegen Verdrehen gesperrt ist.

Wird der passende Schlüssel in das Lenkschloß 5 eingesteckt und in die Fahrtstellung gedreht, so wird durch einen Arm 10 des Lenkschlosses 5 die Hülse 4 angehoben, so daß am oberen Ende der Hülse 4 angeordnete Vorsprünge 11 oder Zähne bzw. Klauen in Ausnehmungen 12 der Welle 2 formschlüssig zur Einlage gelangen, wodurch das Lenkrad 3 mit der Lenkspindel 1 drehfest verbunden ist. Die Teile 11,12 bilden damit eine erste lösbare Kupplung 13, die dafür sorgt, daß bei abgezogenem Schlüssel das Lenkrad 3 mit der Lenkspindel 1 nicht mehr verbunden und bei eingestecktem Schlüssel in Fahrtstellung des Schlüssels die Teile miteinander verbunden sind.

Damit bei abgezogenem Schlüssel das Lenkrad 3 nicht frei drehbar ist, sondern einen begrenzten Halt an der Lenkspindel 1 bzw. an der Hülse 4 hat, ist eine zweite Kupplung vorgesehen, die im Ausführungsbeispiel nach Fig. 1 von einer seitlich an der Hülse 4 befestigten Rastfeder 14 gebildet wird. Diese axparallel angeordnete Rastfeder greift mit ihrem vorderen als Halbkugel ausgebildeten Ende 15 in eine seitliche äußere axparallele Nute in der Mitte Welle 2 ein, wobei die Nut 16 und das Ende 15 ein lösbares Grenzkraftgesperr bzw. ein Formgesperre bilden, so daß bei abgezogenem Schlüssel und erdentkuppelter erster Kupplung das Lenkrad 3 immer noch mit der Lenkspindel 1 solange verbunden ist, bis nicht eine unzulässig große Kraft auf das Lenkrad 3 ausgeübt wird. Wird dieses vorbestimmte höchstzulässige Drehmoment überschritten, so wird das Lenkrad 3 gegenüber der Lenkspindel 1 verdreht, so daß durch das lenkrad 3 die Sperre der Lenkspindel 1 nicht überwunden werden kann.

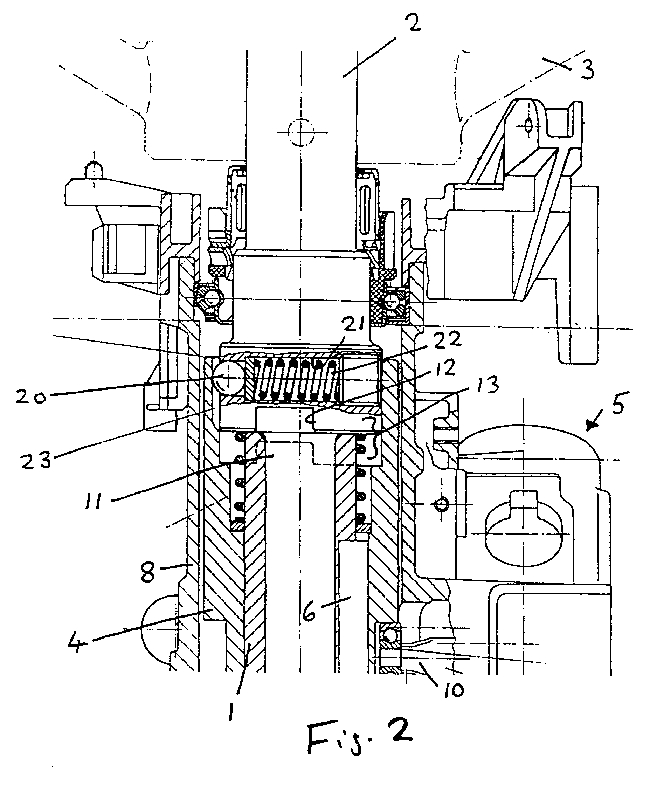

Im Ausführungsbeispiel nach Fig. 2 wird die zweite Kupplung von einer federbelasteten Kugel 20 gebildet, die in einer Querbohrung in der Mitte der Welle 2 gelagert ist, wobei in die Querbohrung 21 die den Federdruck erzeugende Schraubendruckfeder 22 einliegt. Die Hülse 4 übergreift die Querbohrung 21 und weist in Höhe der Kugel 20 eine Längsnut 23 auf, in der die Kugel 20 einrastend einliegt und darin solange verbleibt, bis eine unzulässig hohe Drehkraft auf das Lenkrad 3 ausgeübt wird.

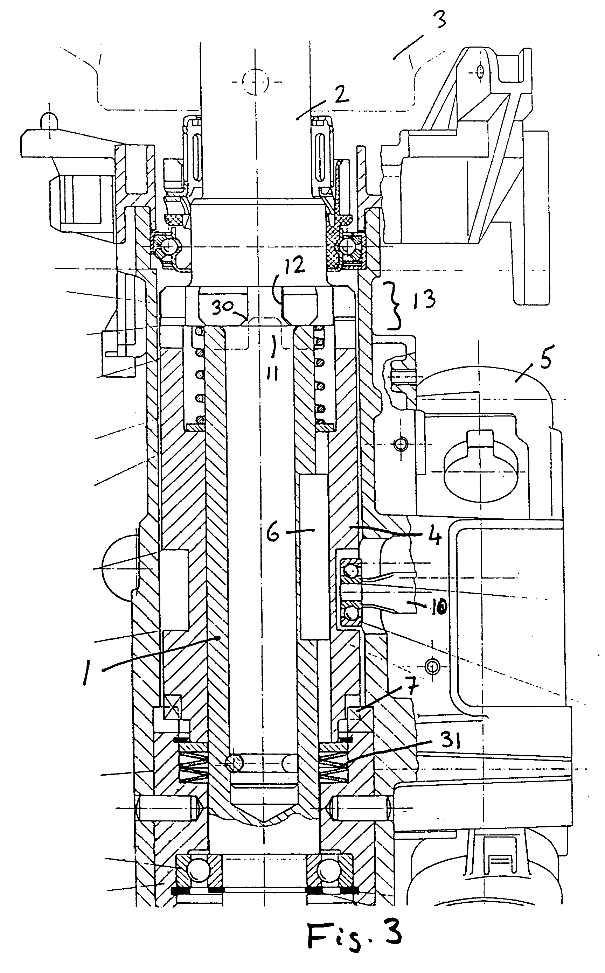

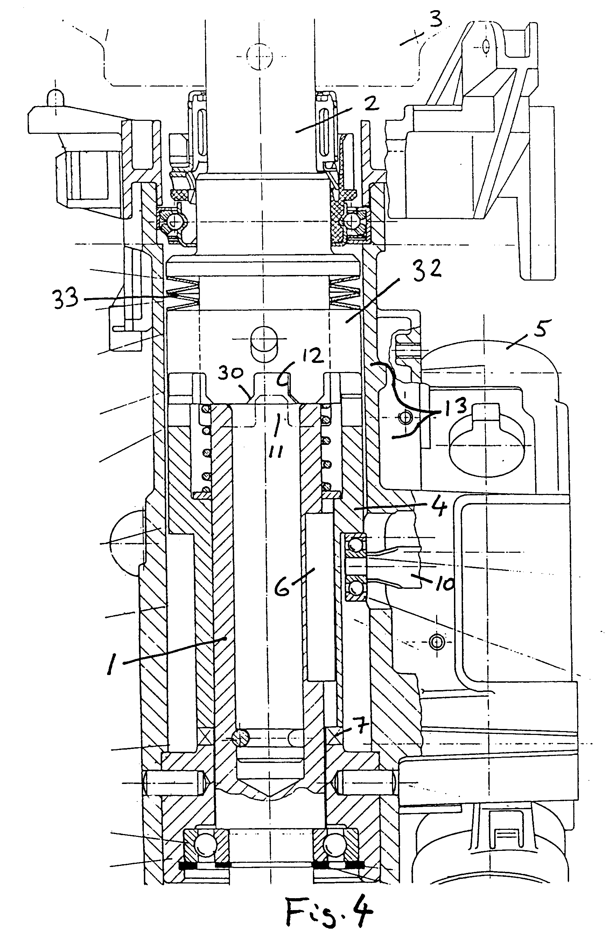

In den Ausführungsbeispielen nach Fig. 3 und 4 sind Alternativlösungen anstelle einer zweiten Kupplung dargestellt, wobei die erste Kupplung (13) die einen begrenzten Drehwiderstand erzeugende Kupplungsfunktion durch entsprechende Ausführung der Kupplungszähne zusätzlich übernimmt.

In Fig. 3 ist die Schlüsselabzugs-Stellung gezeigt. Die Vorsprünge 11 bzw. Zähne liegen nur noch mit ihren Enden in den Ausnehmungen 12 der Lenkradwelle 2 ein, so daß bei einem gewaltsamen Verdrehen des lenkrades 3 die Schrägflächen 30 an den Zahnenden und/oder an den Ausnehmungsvorderseiten Axialkräfte auf die Hülse 4 ausüben, die die Hülse 4 axial gegen den Druck von Tellerfedern 31 verschieben, so daß das Lenkrad frei wird. Statt dessen kann aber auch ein Teil der Lenkradwelle 2 in Form einer Hülse 32 axial nach oben nachgeben und sich gegen den Druck von Tellerfedern 33 verschieden (Fig. 4).

Ein viertes nicht dargestelltes Ausführungsbeispiel weist als zweite Kupplung eine Reibkupplung auf, die dafür sorgt, daß bei entkuppelter erster Kupplung das Lenkrad über die Reibung mit der Lenkspindel noch drehverbunden ist, aber bei Aufwand einer unzulässig großen Kraft auf das Lenkrad sich dieses gegenüber der gesperrten Lenkspindel verdrehen kann. Auch bei dieser Lösung mit einer Reibkupplung (Reibgehemme) kann zusätzlich eine Rastvorrichtung angeordnet sein, die dafür sorgt, daß die richtige Drehstellung des Lenkrades gegenüber der Lenkspindel wieder leicht gefunden werden kann, wenn das Lenkrad gegenüber der Lenkspindel unzulässig verdreht war.

## Patentansprüche

1. Lenkung für ein Kraftfahrzeug mit einer Lenkspindel (1), an der das Lenkrad (3) lösbar angekuppelt ist, wobei das Ein- und Auskuppeln der Kupplung (13) durch ein Lenkungsschloß (5) erfolgt und bei Schlüsselabzug die Lenkspindel (1) gegen Verdrehen gesperrt ist, **dadurch gekennzeichnet,** daß zumindest in der entkuppelten Stellung der Kupplung (13) das Lenkrad (3) mit der Lenkspindel (1) über ein Kupplungselement (14-16; 20-23, 30) verbunden ist, das einen solch begrenzten Drehhalt erzeugt, daß bei gesperrter Lenkspindel (1) und gelöster Kupplung (13) das Lenkrad (3) gegenüber der Lenkspindel (1) verdrehbar ist, wenn ein vorbestimmtes Drehmoment überwunden ist.

2. Lenkung nach Anspruch 1, **dadurch gekennzeichnet,** daß die in einem begrenzten Drehwiderstand erzeugende Kupplungsfunktion von der Kupplung (13) ausübbar ist, wobei bei gesperrter Lenkspindel (1) die Kupplung nur noch einen begrenzten Drehhalt und bei entsperrter Lenkspindel einen unüberwindbaren Drehhalt zwischen Lenkspindel (1) und Lenkrad (3) erzeugt.

3. Lenkung nach Anspruch 1, **dadurch gekennzeichnet,** daß für die einen begrenzten Drehwiderstand erzeugende Kupplungsfunktion eine zweite Kupplung (14-16; 20-23) vorgesehen ist.

4. Lenkung nach Anspruch 3, **dadurch gekennzeichnet,** daß die zweite Kupplung ein seitlich der Lenkspindel liegendes Teil (14,15) aufweist, das an der Lenkspindel (1) fest ist und am Lenkrad (3) bzw. an einer Welle (2) des Lenkrades begrenzt lösbar gehalten ist.

5. Lenkung nach Anspruch 3, **dadurch gekennzeichnet,** daß die zweite Kupplung ein seitlich der Lenkspindel liegendes Teil (14,15) aufweist, das am Lenkrad (3) bzw. an einer Welle (2) des Lenkrades fest ist und an der Lenkspindel (1) begrenzt lösbar gehalten ist.

6. Lenkung nach einem der Ansprüche 3 bis 5, **dadurch gekennzeichnet,** daß die zweite, einen begrenzten Halt erzeugende Kupplung ein Formteil insbesondere eine Kugel (20) in der einen Kupplungshälfte aufweist, das in eine entsprechend geformte Ausnehmung (23) der anderen Kupplungshälfte einrastend gehalten ist.

7. Lenkung nach Anspruch 6, **dadurch gekennzeichnet,** daß die in einem der zwei Kupplungshälften gelagerte Kugel (20) radial oder axial zur Lenkspindelachse gegen Federdruck beweglich ist.

8. Lenkung nach Ansprüchen 1 bis 7, **dadurch gekennzeichnet,** daß die Kupplungszähne bzw. -klauen so ausgewählt sind, insbesondere durch asymmetrisch oder ungleiche Teilung, daß die Kupplung nur in der vorgegebenen Normalstellung des Lenkrades schließbar ist.

## Claims

1. Steering for a motor vehicle having a steering shaft (1), to which the steering wheel (3) is detachably coupled, wherein the engagement and disengagement of the coupling (13) is performed by a steering lock (5) and the steering shaft (1) is prevented from turning with the removal of the key,
**characterised in that** at least in the disengaged position of the coupling (13) the steering wheel (3) is connected to the steering shaft (1) via a coupling element (14-16; 20-23, 30), which produces such a limited anti-torsion grip that, when the steering shaft (1) is locked and the coupling (13) is disengaged, the steering wheel (3) can be turned in relation to the steering shaft (1) if a predetermined turning moment is overcome.

2. Steering according to Claim 1,
**characterised in that** the coupling function being produced within a limited torsional resistance can be exerted by the coupling (13), whereby when the steering shaft (1) is locked the coupling only has a limited anti-torsion grip and when the steering shaft is unlocked produces an unsurmountable anti-torsion grip between the steering shaft (1) and the steering wheel (3).

3. Steering according to Claim 1,
**characterised in that** a second coupling (14-16; 20-23) is provided for the coupling function producing a limited torsional resistance.

4. Steering according to Claim 3,
**characterised in that** the second coupling comprises a part (14, 15) lying to the side of the steering shaft which is fixed to the steering shaft (1) and is detachably retained to a limited extent on the steering wheel (3) or respectively on a shaft (2) of the steering wheel.

5. Steering according to Claim 3,
**characterised in that** the second coupling comprises a part (14, 15) lying to the side of the steering shaft, which is fixed to the steering wheel (3) or to a shaft (2) of the steering wheel and is detachably retained to a limited extent on the steering shaft (1).

6. Steering according to one of Claims 3 to 5,
**characterised in that** the second coupling producing a limited grip comprises a shaped part, in particular a ball (20), in the one coupling half, which is held so that it engages in a correspondingly formed recess (23) in the other coupling half.

7. Steering according to Claim 6,
**characterised in that** the ball (20) mounted in one of the two coupling halves can move radially or axially in relation to the steering shaft axis against spring pressure.

8. Steering according to Claims 1 to 7,
**characterised in that** the coupling teeth or catches are chosen, in particular by asymmetric or non-uniform pitch, so that the coupling can only be closed in the predetermined normal position of the steering wheel.

## Revendications

1. Système de direction pour un véhicule automobile, comportant un arbre de direction (1) avec lequel le volant (3) est accouplé de manière séparable, dans lequel l'embrayage et le débrayage du dispositif de couplage (13) s'effectuent au moyen d'une serrure de direction (5) et dans lequel, lors de l'extraction de la clé, l'arbre de direction (1) est bloqué en rotation, caractérisé en ce qu'au moins dans la position de débrayage du dispositif de couplage (13), le volant (3) est relié à l'arbre de direction (1) par l'intermédiaire d'un élément de couplage (14-16; 20-23; 30) qui produit une résistance limitée à la rotation telle que, lorsque l'arbre de direction (1) est verrouillé et que le dispositif de couplage (13) est libéré, le volant (3) peut tourner par rapport à l'arbre de direction (1) lorsque l'on a dépassé un couple de rotation prédéterminé.

2. Système de direction selon la revendication 1, caractérisé en ce que la fonction de couplage produisant une résistance limitée à la rotation est réalisé par le dispositif de couplage (13), ce dispositif de couplage produisant, lorsque l'arbre de direction (1) est verrouillé, seulement une résistance à la rotation limitée entre l'arbre de direction (1) et le volant (3) et, lorsque l'arbre de direction, (1) est déverrouillé, une résistance à la rotation insurmontable entre l'arbre de direction (1) et le volant (3).

3. Système de direction selon la revendication 1, caractérisé en ce que, pour la fonction de couplage produisant une résistance limitée à la rotation, il est prévu un deuxième dispositif de couplage (14-16; 20-23).

4. Système de direction selon la revendication 3, caractérisé en ce que le deuxième dispositif de couplage comporte une pièce (14, 15) qui est disposée latéralement par rapport à l'arbre de direction, qui est fixée sur l'arbre de direction (1) et qui est maintenue de manière limitée et de manière séparable sur le volant (3) ou sur un axe (2) du volant.

5. Système de directions selon la revendication 3, caractérisé en ce que le deuxième dispositif de couplage comporte une pièce (14, 15) qui est disposée, sur le côté l'arbre de direction, qui est fixée sur le volant (3) ou sur un axe (2) du volant et qui est maintenue de manière limitée et de manière séparable sur l'arbre de direction (1).

6. Système de direction selon l'une quelconque des revendications 3 à 5, caractérisé en ce que le deuxième dispositif de couplage produisant une résistance limitée comporte une pièce de forme prédéterminée, en particulier une bille (20), disposée dans une première moitié de ce dispositif de couplage et qui est maintenue avec accrochage dans un évidement (23) de forme correspondante de la deuxième moitié de ce dispositif de couplage.

7. Système de direction selon la revendication 6, caractérisé en ce que la bille (20) logée dans l'une des deux moitiés du dispositif de couplage est mobile en direction radiale ou en direction axiale par rapport à l'arbre de direction à l'encontre d'une action antagoniste d'un ressort de pression.

8. Système de direction selon l'une quelconque des revendications 1 à 7, caractérisé en ce que les dents ou les griffes de couplage sont choisies, en particulier par répartition asymétrique ou inégale, de telle manière que le dispositif de couplage ne peut être verrouillé que dans la position normale prédéterminée du volant.
